# EUROPÄISCHE PATENTSCHRIFT

(11) **EP 4 323 728 B1**
(45) Veröffentlichungstag und Bekanntmachung des Hinweises auf die Patenterteilung: **05.08.2026**
(21) Anmeldenummer: 22717372.1
(22) Anmeldetag: 21.03.2022
(51) Int. Cl.: G01D 11/24, G01D 21/00

(54) **SCHUTZHAUBE FÜR EIN FELDGERÄT UND FELDGERÄT DER MESS-/AUTOMATISIERUNGSTECHNIK**
PROTECTIVE HOOD FOR A FIELD DEVICE, AND MEASUREMENT/AUTOMATION FIELD DEVICE
CAPOT DE PROTECTION DESTINÉ À UN DISPOSITIF DE TERRAIN, ET DISPOSITIF DE TERRAIN DE MESURE/D'AUTOMATISATION

(30) Priorität: 14.04.2021 DE 102021109404
(43) Veröffentlichungstag der Anmeldung: 21.02.2024
(73) Patentinhaber: Endress+Hauser Flowtec AG, 4153 Reinach (CH)
(72) Erfinder: LARSSON, Björn, 4127 Birsfelden (CH); LOEFFEL, Philipp, 4104 Oberwil (CH)
(74) Vertreter: Endress + Hauser Group Services (Deutschland) AG+Co. KG
(86) Internationale Anmeldenummer: PCT/EP2022/057318
(87) Internationale Veröffentlichungsnummer: WO 2022/218647

(56) Entgegenhaltungen:
- DE-A1- 102011 004 447
- DE-A1- 19 514 026
- DE-A1- 3 216 229
- DE-A1- 4 400 993
- DE-A1- 4 403 660
- US-B2- 10 077 149

## Beschreibung

Die Erfindung betrifft eine Schutzhaube für ein Feldgerät und ein Feldgerät der Mess-/Automatisierungstechnik.

Feldgeräte der Mess-/Automatisierungstechnik werden häufig in Umgebungen mit widrigen Bedingungen eingesetzt, so dass Schutzhauben eingesetzt werden, welche dazu eingerichtet sind, die Feldgeräte vor Beschädigung zu schützen. Ein Beispiel für eine solche Schutzhaube findet sich in der EP2105715B1, bei welcher sich die Schutzhaube mittels eines Klapp- und Rastmechanismus an einem Feldgerät befestigen lässt, wobei die Schutzhaube zwei aufklappbare Schutzhaubenteile aufweist. Eine solche Schutzhaube ist jedoch mechanisch nicht besonders stabil, und Rastnasen mit Umgebungskontakt sind ihrerseits anfällig für Beschädigung. Es ist auch bekannt, Schutzhauben an Feldgerätegehäusen festzuschrauben, jedoch erfordert dies den Einsatz von Werkzeug, was man gerne vermeiden möchte.

Die Schrift DE102011004447A1 lehrt eine Sensoranordnung mit einer einen Grundträger aufweisenden Sensoreinheit, wobei eine elastische Kappe vorgesehen ist, welche zumindest teilweise über den als Gehäuse ausgeführten Grundträger schiebbar ist und eine Aufnahmetasche dichtend abschließt. Die Kappe ist durch eine elastische Verformung stülpbar, so dass sie nach einer Verformung Gehäuse mittels einer Befestigungseinrichtung eingreift.

Als Aufgabe der Erfindung kann es gesehen werden, eine robuste Schutzhaube sowie ein Feldgerät mit einer solchen Schutzhaube vorzuschlagen, welche auf einfache Art und Weise montierbar und demontierbar ist.

Die Aufgabe wird gelöst durch eine erfindungsgemäße Schutzhaube gemäß dem unabhängigen Anspruch 1 sowie durch ein erfindungsgemäßes Feldgerät gemäß dem unabhängigen Anspruch 7.

Eine erfindungsgemäße Schutzhaube eingerichtet für ein Feldgerät der Mess-/Automatisierungstechnik weist eine Längsachse sowie eine Haubenwandung auf, welche eine Haubenkammer mit einem offenen ersten Ende und einem geschlossenen zweiten Ende ausbildet,
wobei die Haubenkammer dazu eingerichtet ist, ein Elektronikgehäuse des Feldgeräts über das offene erste Ende entlang der Längsachse aufzunehmen,
wobei die Schutzhaube zumindest eine Befestigungseinrichtung aufweist, welche insbesondere dazu eingerichtet ist, mit dem Elektronikgehäuse mechanisch kontaktiert zu werden,
wobei die Befestigungseinrichtung einen Vorsprung aufweist,
wobei die Schutzhaube elastisch verformbar ist, wobei die Schutzhaube ohne Krafteinwirkung eine erste Form aufweist, in welcher die Befestigungseinrichtung einen ersten Abstand zur Längsachse aufweist,
wobei die Schutzhaube derart durch eine Krafteinwirkung in eine zweite Form elastisch verformbar ist, in welcher zweiten Form die Befestigungseinrichtung einen zweiten Abstand zur Längsachse aufweist, welcher größer ist als der erste Abstand,
wobei die Befestigungseinrichtung integral in der Haubenwandung ausgebildet ist,
dass durch die elastische Verformung der Schutzhaube in die zweite Form die Schutzhaube auf das Elektronikgehäuse derart stülpbar ist, dass die Schutzhaube bei Rückkehr in die erste Form am Elektronikgehäuse mittels der Befestigungseinrichtung an dem Elektronikgehäuse eingreift,
wobei der Vorsprung eine erste Fläche aufweist, wobei ein Normalenvektor der ersten Fläche dem zweiten Ende zugewandt ist, wobei ein Innenwinkel zwischen dem Normalenvektor und dem Haubenquerschnitt der Schutzhaube größer ist als 45 Grad und insbesondere größer als 55 Grad, und bevorzugt größer als 60 Grad,
wobei der Innenwinkel kleiner ist als 85 Grad und insbesondere kleiner als 80 Grad und bevorzugt kleiner als 75 Grad,
wobei der Vorsprung eine zweite Fläche aufweist, wobei ein Normalenvektor der zweiten Fläche dem ersten Ende zugewandt ist, wobei der Innenwinkel zwischen dem Normalenvektor und dem Haubenquerschnitt der Schutzhaube kleiner ist als 45 Grad und insbesondere kleiner ist als 35 Grad.

Die Erfindung hat den Vorteil, dass verhindert wird, dass sich die Schutzhaube durch Ziehen entlang einer Längsachse der Schutzhaube entfernen lässt.

Weiterhin besteht der Vorteil, dass der Vorsprung bei montierter Schutzhaube eine Kraft in Richtung des ersten offenen Endes ausübt, wodurch die Schutzhaube fest auf dem Elektronikgehäuse angeordnet ist.

Weiterhin besteht der Vorteil, dass sich die Schutzhaube einfach durch Aufstecken auf ein zugehöriges Elektronikgehäuse montieren lässt.

In einer Ausgestaltung folgt ein Haubenquerschnitt in der ersten Form einem Kreis, wobei der Haubenquerschnitt in der zweiten Form einem Oval folgt.

In einer Ausgestaltung wobei die Schutzhaube im Bereich des zweiten Endes zumindest eine Beabstandungsvorrichtung aufweist, welche dazu eingerichtet ist, einen Mindestabstand zwischen dem zweiten Ende und dem Elektronikgehäuse sicherzustellen.

In einer Ausgestaltung ist die Schutzhaube aus einem Kunststoff oder einem Metall gefertigt ist.

In einer Ausgestaltung ist zur Überführung der Schutzhaube in die zweite Form eine Krafteinwirkung von höchstens 100 Newton, und insbesondere höchstens 50 Newton nötig.

Auf diese Weise kann die Schutzhaube ohne Werkzeug alleine durch händische Bedienung entfernt und/oder montiert werden.

In einer Ausgestaltung ist der zweite Abstand mindestens 5% größer ist als der erste Abstand, und bevorzugt mindestens 10% größer ist als der erste Abstand,
oder wobei der zweite Abstand mindestens 1 Millimeter und bevorzugt mindestens 2 Millimeter größer ist als der erste Abstand.

Ein erfindungsgemäßes Feldgerät der Mess-/Automatisierungstechnik umfasst:
ein Elektronikgehäuse mit einer eine Gehäusekammer ausbildende Gehäusewandung;
einen Messaufnehmer eingerichtet zum Erzeugen eines Messsignals einer Messgröße;
eine elektronische Mess-/Betriebsschaltung zum Bereitstellen von Messwerten der Messgröße mittels des Messsignals, wobei die elektronische Mess-/Betriebsschaltung in der Gehäusekammer angeordnet ist,
wobei das Feldgerät eine erfindungsgemäße Schutzhaube aufweist, wobei das Elektronikgehäuse in der Haubenkammer angeordnet ist und die Schutzhaube trägt.

Das Gehäuse kann dabei einen oder mehrere Gehäusedeckel umfassen, welche Öffnungen zur Gehäusekammer verschließen. Der mindestens eine Gehäusedeckel bildet somit einen Teil der Gehäusewandung aus.

In einer Ausgestaltung weist die Haubenwandung in der ersten Form zum Gehäuse zumindest außerhalb eines Bereichs der mindestens einen ersten Befestigungsvorrichtung sowie der Beabstandungsvorrichtung einen Abstand von höchstens 30 Millimeter und/oder mindestens 5 Millimeter aufweist.

In einer Ausgestaltung liegt die mindestens eine erste Befestigungsvorrichtung mit der Haubenwandung in der ersten Form auf der Gehäusewandung, insbesondere einer Spitze, Kante oder auf einer Fläche der Gehäusewandung auf und eine Kraft auf die Schutzhaube mit einer Kraftkomponente in Richtung des offenen ersten Endes bewirkt.

Im Folgenden wird die Erfindung anhand von Ausführungsbeispielen beschrieben.
Fig. 1 zeigt einen Längsschnitt durch eine beispielhafte erfindungsgemäße Schutzhaube;
Fig. 2 skizziert zwei verschiedene Formen eines Querschnitts durch die Schutzhaube;
Fig. 3 skizziert ein schematisches, beispielhaftes erfindungsgemäßes Feldgerät.

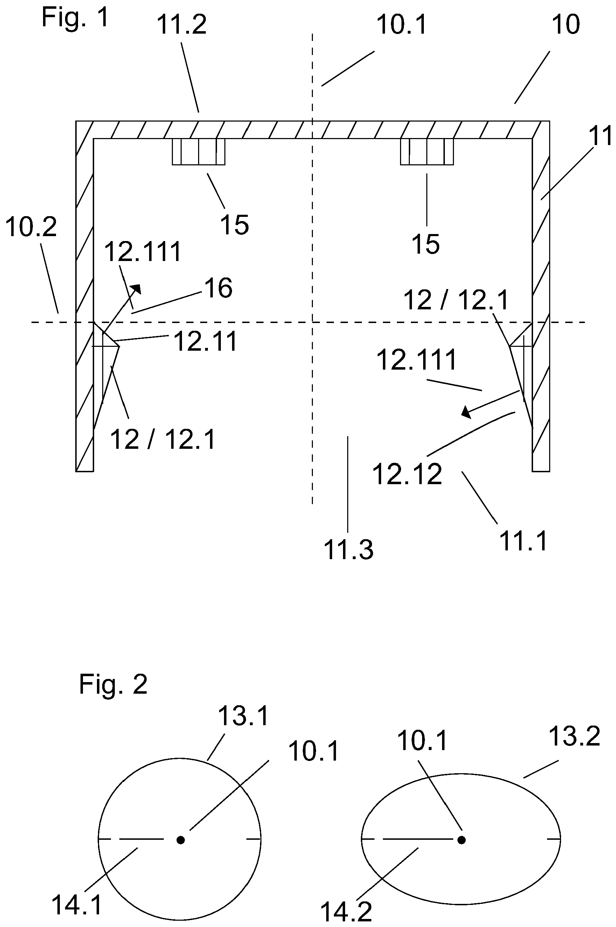

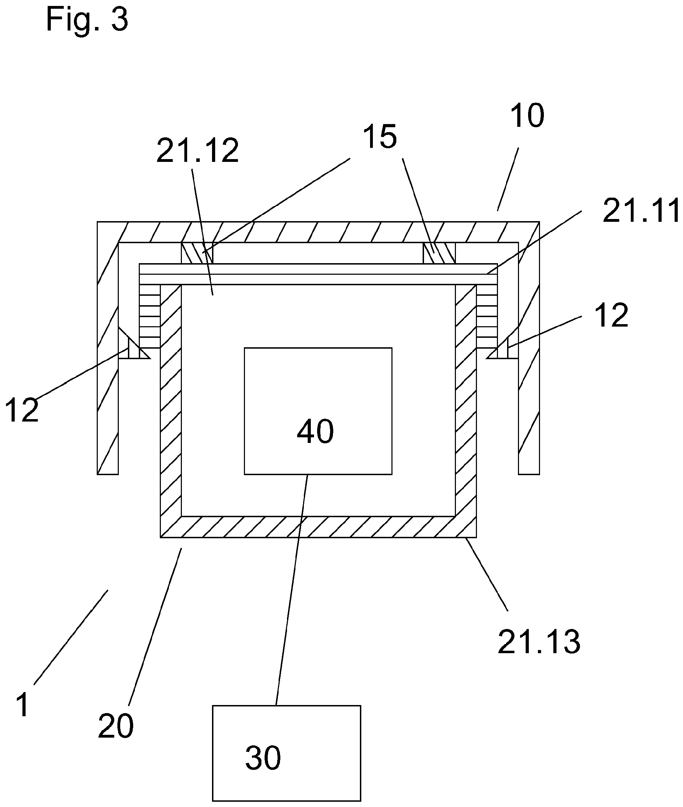

Fig. 1 zeigt einen Längsschnitt durch eine beispielhafte erfindungsgemäße Schutzhaube 10 für ein Feldgerät 1 der Mess-/Automatisierungstechnik, wobei die Schutzhaube eine Längsachse 10.1 und eine Haubenwandung 11 aufweist. Die Haubenwandung weist ein erstes offenes Ende 11.1 und ein zweites geschlossenes Ende 11.2 auf bildet eine Haubenkammer 11.3 aus. Die Schutzhaube ist dazu eingerichtet, entlang der Längsachse über das offene erste Ende ein Elektronikgehäuse 20, siehe Fig. 3, des Feldgeräts aufzunehmen. Die Schutzhaube weist zumindest eine Befestigungsvorrichtung 12, hier beispielsweise zwei, auf, mittels welcher die Schutzhaube am Elektronikgehäuse befestigbar ist. Die Schutzhaube kann wie hier gezeigt auch eine Beabstandungsvorrichtung 15 aufweisen, welche dazu eingerichtet ist, einen Mindestabstand zwischen einem aufgenommenen Elektronikgehäuse und der Haubenwandung im Bereich des zweiten Endes sicherzustellen.

Die Befestigungseinrichtung kann wie hier gezeigt einen Vorsprung 12.1 mit einer der ersten Fläche 12.11 umfassen, bei welcher ein Normalenvektor 12.111 der ersten Fläche dem zweiten Ende zugewandt ist. Ein Innenwinkel 16 zwischen dem Normalenvektor und einem Haubenquerschnitt 10.2 der Schutzhaube ist größer als 45 Grad und insbesondere größer als 55 Grad und bevorzugt größer als 60 Grad. Somit wird ein Abziehen der Schutzhaube durch Krafteinwirkung entlang der Längsachse erschwert bzw. verhindert. In einer Ausgestaltung ist der Innenwinkel dabei kleiner als 85 Grad, und insbesondere kleiner als 80 Grad und bevorzugt kleiner als 75 Grad. Auf diese Weise bewirkt die an einem Elektronikgehäuse angebrachte Schutzhaube eine Vorspannung gegenüber dem zweiten Ende der Haubenwandung, so dass sie fest und sicher sitzt.

Der Vorsprung kann wie hier gezeigt eine zweite Fläche 12.12 umfassen, wobei ein Normalenvektor 12.111 der zweiten Fläche dem ersten Ende 11.1 zugewandt ist, wobei ein Innenwinkel 16 zwischen dem Normalenvektor und dem Haubenquerschnitt 10.2 der Schutzhaube kleiner ist als 45 Grad und insbesondere kleiner ist als 35 Grad. Auf diese Weise lässt sich die Schutzhaube einfach durch Aufstecken auf ein zugehöriges Elektronikgehäuse montieren.

Die Befestigungseinrichtung kann dabei integral in die Haubenwandung ausgebildet sein, wobei die Haubenwandung beispielsweise durch ein Spritzgussverfahren oder ein Druckumformverfahren hergestellt sein kann.

Die Haubenwandung kann dabei aus einem Kunststoff oder einem Metall gefertigt sein.

Fig. 2 skizziert einen wesentlichen Aspekt der Erfindung. Erfindungsgemäß ist die Schutzhaube elastisch verformbar, wobei die Schutzhaube ohne Krafteinwirkung eine erste Form 13.1 aufweist, in welcher die Befestigungseinrichtung einen ersten Abstand 14.1 zur Längsachse aufweist, wobei die Schutzhaube durch eine Krafteinwirkung in eine zweite Form 13.2 elastisch verformbar ist, in welcher zweiten Form die Befestigungseinrichtung einen zweiten Abstand 14.2 zur Längsachse aufweist, welcher größer ist als der erste Abstand. Der Haubenquerschnitt 10.2 wann wie in Fig. 2 gezeigt in der ersten Form 13.1 einem Kreis folgen und in der zweiten Form 13.2 einem Oval folgen.

Auf diese Weise kann durch elastische Verformung der Schutzhaube in die zweite Form die Schutzhaube auf ein Elektronikgehäuse gestülpt werden und bei Rückkehr in die erste Form am Elektronikgehäuse mittels der Befestigungseinrichtung am Gehäuse eingreifen.

In einer Ausgestaltung ist der zweite Abstand mindestens 5% größer ist als der erste Abstand, und bevorzugt mindestens 10% größer ist als der erste Abstand, oder wobei der zweite Abstand mindestens 1 Millimeter und bevorzugt mindestens 2 Millimeter größer ist als der erste Abstand.

Um die Schutzhaube ohne Werkzeug rein händisch an einem Elektronikgehäuse anbringen zu können, kann sie so eingerichtet sein, dass für die Überführung der Schutzhaube in die zweite Form 13.2 eine Krafteinwirkung von höchstens 100 Newton, und insbesondere höchstens 50 Newton nötig ist. Der Fachmann kann dabei auf Simulationsprogramme oder einschlägige Formeln bzw. Fachwissen der technischen Mechanik zurückgreifen, um dies zu bewerkstelligen.

Fig. 3 skizziert einen Längsschnitt durch beispielhaftes erfindungsgemäßes Feldgerät 1 der Mess-/Automatisierungstechnik mit einem Elektronikgehäuse 20, einem Messaufnehmer 30 eingerichtet zum Erzeugen eines Messsignals einer Messgröße und einer im Elektronikgehäuse angeordneten elektronischen Mess-/Betriebsschaltung 40 zum Bereitstellen von Messwerten der Messgröße mittels des Messsignals sowie einer erfindungsgemäßen Schutzhaube 10, welche durch das Elektronikgehäuse getragen ist. Das hier gezeigte beispielhafte Elektronikgehäuse weist eine Gehäusewandung 21 auf, welche einen Gehäusetopf 21.13 mit einer Gehäuseöffnung 21.12 aufweist, welche durch einen Gehäusedeckel 21.11 verschlossen ist. Die Schutzhaube kann dabei wie hier gezeigt an einer Kante des Elektronikgehäuses, hier eine Kante des Gehäusedeckels angreifen und sich dadurch am Elektronikgehäuse befestigen. Alternativ kann auch der Gehäusetopf Angriffsstellen für die Schutzhaube bieten.

Die Haubenwandung 11 kann in der ersten Form 13.1 zum Elektronikgehäuse 20 zumindest außerhalb eines Bereichs der mindestens einen ersten Befestigungsvorrichtung 12 sowie der Beabstandungsvorrichtung 15 einen Abstand von höchstens 30 Millimeter und/oder mindestens 2 und insbesondere mindestens 5 Millimeter aufweisen. Auf diese Weise ist ein ausreichender Spielraum für die Demontage der Schutzhaube in der zweiten Form sowie ein guter Schutz gegen widrige Bedingungen gegeben.

### Bezugszeichenliste

- 1: Feldgerät
- 10: Schutzhaube
- 10.1: Längsachse
- 10.2: Haubenquerschnitt
- 11: Haubenwandung
- 11.1: offenes erstes Ende
- 11.2: geschlossenes zweites Ende
- 11.3: Haubenkammer
- 12: Befestigungseinrichtung
- 12.1: Vorsprung
- 12.11: erste Fläche
- 12.111: Normalenvektor
- 13.1: erste Form
- 13.2: zweite Form
- 14.1: erster Abstand
- 14.2: zweiter Abstand
- 15: Beabstandungsvorrichtung
- 16: Innenwinkel
- 20: Elektronikgehäuse
- 21: Gehäusewandung
- 21.11: Gehäusedeckel
- 21.12: Gehäuseöffnung
- 21.13: Gehäusetopf
- 22: Gehäusekammer
- 30: Messaufnehmer
- 40: elektronische Mess-/Betriebsschaltung

## Patentansprüche

1. Schutzhaube (10) eingerichtet für ein Feldgerät (1) der Mess-/Automatisierungstechnik,
wobei die Schutzhaube eine Längsachse (10.1) sowie eine Haubenwandung (11) mit einem offenen ersten Ende (11.1) und einem geschlossenen zweiten Ende (11.2) aufweist, welche Haubenwandung eine Haubenkammer (11.3) ausbildet,
wobei die Haubenkammer dazu eingerichtet ist, ein Elektronikgehäuse (20) des Feldgeräts über das offene erste Ende entlang der Längsachse aufzunehmen, wobei die Schutzhaube zumindest eine Befestigungseinrichtung (12) aufweist, welche dazu eingerichtet ist, mit dem Elektronikgehäuse mechanisch kontaktiert zu werden,
wobei die Befestigungseinrichtung (12) einen Vorsprung (12.1) aufweist,
wobei die Schutzhaube ohne Krafteinwirkung eine erste Form (13.1) aufweist, in welcher die Befestigungseinrichtung einen ersten Abstand (14.1) zur Längsachse aufweist,
**dadurch gekennzeichnet, dass**
die Schutzhaube derart durch eine Krafteinwirkung in eine zweite Form (13.2) elastisch verformbar ist, in welcher zweiten Form die Befestigungseinrichtung einen zweiten Abstand (14.2) zur Längsachse aufweist, welcher größer ist als der erste Abstand, dass durch die elastische Verformung der Schutzhaube in die zweite Form die Schutzhaube auf das Elektronikgehäuse derart stülpbar ist, dass die Schutzhaube bei Rückkehr in die erste Form am Elektronikgehäuse mittels der Befestigungseinrichtung an dem Elektronikgehäuse eingreift,
wobei die Befestigungseinrichtung integral in der Haubenwandung ausgebildet ist,
wobei der Vorsprung (12.1) eine erste Fläche (12.11) aufweist, wobei ein Normalenvektor (12.111) der ersten Fläche dem zweiten Ende (11.2) zugewandt ist, wobei ein Innenwinkel (16) zwischen dem Normalenvektor und einem Haubenquerschnitt (10.2) der Schutzhaube größer ist als 45 Grad und insbesondere größer als 55 Grad, und bevorzugt größer als 60 Grad,
wobei der Innenwinkel kleiner ist als 85 Grad und insbesondere kleiner als 80 Grad und bevorzugt kleiner als 75 Grad,
wobei der Vorsprung (12.1) eine zweite Fläche (12.12) aufweist, wobei ein Normalenvektor (12.111) der zweiten Fläche dem ersten Ende (11.1) zugewandt ist, wobei der Innenwinkel (16) zwischen dem Normalenvektor und dem Haubenquerschnitt (10.2) der Schutzhaube kleiner ist als 45 Grad und insbesondere kleiner ist als 35 Grad.

2. Schutzhaube nach Anspruch 1,
wobei ein Haubenquerschnitt (10.2) in der ersten Form (13.1) einem Kreis folgt, wobei der Haubenquerschnitt in der zweiten Form (13.2) einem Oval folgt.

3. Schutzhaube nach Anspruch 1 oder 2,
wobei die Schutzhaube (10) im Bereich des zweiten Endes zumindest eine Beabstandungsvorrichtung (15) aufweist, welche dazu eingerichtet ist, einen Mindestabstand zwischen dem zweiten Ende und dem Elektronikgehäuse sicherzustellen.

4. Schutzhaube nach einem der vorigen Ansprüche,
wobei die Schutzhaube (10) aus einem Kunststoff oder einem Metall gefertigt ist.

5. Schutzhaube nach einem der vorigen Ansprüche,
wobei zur Überführung der Schutzhaube (10) in die zweite Form (13.2) eine Krafteinwirkung von höchstens 100 Newton, und insbesondere höchstens 50 Newton nötig ist.

6. Schutzhaube nach einem der vorigen Ansprüche,
wobei der zweite Abstand (14.2) mindestens 5% größer ist als der erste Abstand (14.1), und bevorzugt mindestens 10% größer ist als der erste Abstand,
oder wobei der zweite Abstand mindestens 1 Millimeter und bevorzugt mindestens 2 Millimeter größer ist als der erste Abstand.

7. Feldgerät (1) der Mess-/Automatisierungstechnik umfassend:
ein Elektronikgehäuse (20) mit einer eine Gehäusekammer (22) ausbildende Gehäusewandung (21);
einen Messaufnehmer (30) eingerichtet zum Erzeugen eines Messsignals einer Messgröße;
eine elektronische Mess-/Betriebsschaltung (40) zum Bereitstellen von Messwerten der Messgröße mittels des Messsignals, wobei die elektronische Mess-/Betriebsschaltung in der Gehäusekammer angeordnet ist,
**dadurch gekennzeichnet, dass**
das Feldgerät eine Schutzhaube (10) nach einem der vorigen Ansprüche aufweist, wobei das Elektronikgehäuse in der Haubenkammer (11.3) angeordnet ist und die Schutzhaube trägt.

8. Feldgerät nach Anspruch 7,
wobei die Haubenwandung (11) in der ersten Form (13.1) zum Elektronikgehäuse (20) zumindest außerhalb eines Bereichs der mindestens einen ersten Befestigungsvorrichtung (12) sowie der Beabstandungsvorrichtung (15) einen Abstand von höchstens 30 Millimeter und/oder mindestens 5 Millimeter aufweist.

9. Feldgerät nach Anspruch 7 oder 8,
wobei die mindestens eine erste Befestigungsvorrichtung (12) mit der Haubenwandung (11) in der ersten Form auf der Gehäusewandung (21), insbesondere auf einer Spitze, Kante oder auf einer Fläche der Gehäusewandung aufliegt und eine Kraft auf die Schutzhaube (10) mit einer Kraftkomponente in Richtung des offenen ersten Endes bewirkt.

10. Feldgerät nach einem der Ansprüche 8 bis 9,
wobei die Schutzhaube durch Bewirken einer Kraft entlang der Längsachse der Schutzhaube am Feldgerät montierbar ist, und wobei die Schutzhaube durch Verformen in die zweite Form und Abziehen demontierbar ist.

## Claims

1. Protective hood (10) configured for a field device (1) of measurement and/or automation technology,
wherein the protective hood comprises a longitudinal axis (10.1) and a hood wall (11) having an open first end (11.1) and a closed second end (11.2), the hood wall forming a hood chamber (11.3),
wherein the hood chamber is configured in particular to receive an electronics housing (20) of the field device via the open first end along the longitudinal axis,
wherein the protective hood comprises at least one fastening apparatus (12) configured in particular to come into mechanical contact with the electronics housing,
wherein the fastening apparatus (12) comprises a projection (12.1),
wherein, without application of force, the protective hood has a first shape (13.1), in which the fastening apparatus has a first distance (14.1) from the longitudinal axis,
**characterized in that**
the protective hood can be elastically deformed, by application of a force, into a second shape (13.2), in which the fastening apparatus has a second distance (14.2) from the longitudinal axis, which is greater than the first distance,
**in that**, by the elastic deformation into the second shape, the protective hood can be slipped over the electronics housing such that, upon return to the first shape, the protective hood engages the electronics housing by means of the fastening apparatus,
wherein the fastening apparatus is integrally formed in the hood wall.
wherein the projection (12.1) has a first surface (12.11), a normal vector (12.111) of the first surface being directed towards the second end (11.2),
wherein an interiorangle (16) between the normal vector and a hood cross-section (10.2) is greater than 45°, in particular greater than 55°, preferably greater than 60°,
and less than 85°, in particular less than 80°, preferably less than 75°,
wherein the projection (12.1) has a second surface (12.12), a normal vector of the second surface being directed towards the first end (11.1),
wherein the interior angle between this normal vector and the hood cross-section is less than 45°, in particular less than 35°.

2. Protective hood according to claim 1,
wherein the hood cross-section (10.2) in the first shape (13.1) is circular and in the second shape (13.2) is oval.

3. Protective hood according to claim 1 or 2,
wherein the protective hood (10) comprises, in the region of the second end, at least one spacing aparatus (15) configured to ensure a minimum distance between the second end and the electronics housing.

4. Protective hood according to any of the preceding claims,
wherein the protective hood (10) is made of a plastic material or a metal.

5. Protective hood according to any of the preceding claims,
wherein a force of at most 100 N, in particular at most 50 N, is required to deform the protective hood into the second shape (13.2).

6. Protective hood according to any of the preceding claims,
wherein the second distance (14.2) is at least 5%, preferably at least 10%, greater than the first distance (14.1),
or is at least 1 mm, preferably at least 2 mm, greater than the first distance.

7. Field device (1) of measurement and/or automation technology, comprising:
- an electronics housing (20) having a housing wall (21) forming a housing chamber (22);
- a sensor (30) configured to generate a measurement signal representing a measured variable;
- an electronic measuring/operating circuit (40) configured to provide measured values of the measured variable based on the measurement signal, the circuit being arranged in the housing chamber,
**characterized in that**
the field device comprises a protective hood (10) according to any of the preceding claims,
wherein the electronics housing is arranged in the hood chamber (11.3) and supports the protective hood.

8. Field device according to claim 7,
wherein the hood wall (11) in the first shape (13.1) has, at least outside a region of the fastening apparatus (12) and the spacing apparatus (15), a distance from the electronics housing (20) of at most 30 mm and/or at least 5 mm.

9. Field device according to claim 7 or 8,
wherein the at least one fastening apparatus (12), in the first shape, engages the housing wall (21), in particular at a tip.
rests on an edge or on a surface of the housing wall and exerts a force on the protective cover (10) with a force component directed toward the open first end.

10. Field device according to any one of claims 8 through 9
wherein the protective cover can be mounted on the field device by applying a force along the longitudinal axis of the
protective cover, and wherein the protective cover can be removed by deforming it into the second shape and pulling it off.

## Revendications

1. Capot de protection (10) destiné à un appareil de terrain (1) de technique de mesure et/ou d'automatisation,
ledit capot de protection comprenant un axe longitudinal (10.1) ainsi qu'une paroi de capot (11) présentant une première extrémité ouverte (11.1) et une seconde extrémité fermée (11.2), ladite paroi de capot formant une chambre de capot (11.3),
où la chambre de capot est notamment configurée pour recevoir un boîtier électronique (20) de l'appareil de terrain via la première extrémité ouverte le long de l'axe longitudinal,
où le capot de protection comprend au moins un dispositif de fixation (12), lequel est notamment configuré pour entrer en contact mécanique avec le boîtier électronique,
où le dispositif de fixation (12) présente une saillie (12.1),
où le capot de protection présente, en l'absence d'application d'une force, une première forme (13.1), dans laquelle le dispositif de fixation présente une première distance (14.1) par rapport à l'axe longitudinal,
**caractérisé en ce que**
le capot de protection est apte à être déformé élastiquement, sous l'effet d'une force, en une seconde forme (13.2), dans laquelle le dispositif de fixation présente une seconde distance (14.2) par rapport à l'axe longitudinal, laquelle est supérieure à la première distance,
et **en ce que**, par la déformation élastique du capot de protection dans la seconde forme, le capot de protection peut être enfilé sur le boîtier électronique de telle sorte que, lors du retour dans la première forme, le capot de protection s'accroche au boîtier électronique au moyen du dispositif de fixation,
où le dispositif de fixation est formé d'une seule pièce avec la paroi du capot,
où la saillie (12.1) présente une première surface (12.11), un vecteur normal (12.111) de la première surface étant orienté vers la seconde extrémité (11.2),
où un angle intérieur (16) entre le vecteur normal et une section transversale de capot (10.2) du capot de protection est supérieur à 45 degrés, en particulier supérieur à 55 degrés et de préférence supérieur à 60 degrés,
où l'angle intérieur est inférieur à 85 degrés, en particulier inférieur à 80 degrés et de préférence inférieur à 75 degrés,
où la saillie (12.1) présente une seconde surface (12.12), un vecteur normal de la seconde surface étant orienté vers la première extrémité (11.1),
où l'angle intérieur (16) entre le vecteur normal et la section transversale de capot (10.2) du capot de protection est inférieur à 45 degrés, en particulier inférieur à 35 degrés.

2. Capot de protection selon la revendication 1,
où une section transversale de capot (10.2) suit un cercle dans la première forme (13.1), et où la section transversale de capot suit un ovale dans la seconde forme (13.2).

3. Capot de protection selon la revendication 1 ou 2,
où le capot de protection (10) présente, dans la zone de la seconde extrémité, au moins un dispositif d'écartement (15), lequel est configuré pour garantir une distance minimale entre la seconde extrémité et le boîtier électronique.

4. Capot de protection selon l'une quelconque des revendications précédentes,
où le capot de protection (10) est fabriqué en matière plastique ou en métal.

5. Capot de protection selon l'une quelconque des revendications précédentes,
où une force d'au plus 100 newtons, en particulier d'au plus 50 newtons, est nécessaire pour amener le capot de protection (10) dans la seconde forme (13.2).

6. Capot de protection selon l'une quelconque des revendications précédentes,
où la seconde distance (14.2) est d'au moins 5 %, et de préférence d'au moins 10 %, supérieure à la première distance (14.1),
ou bien où la seconde distance est d'au moins 1 millimètre et de préférence d'au moins 2 millimètres supérieure à la première distance.

7. Appareil de terrain (1) de technique de mesure et/ou d'automatisation comprenant :
- un boîtier électronique (20) présentant une paroi de boîtier (21) formant une chambre de boîtier (22) ;
- un capteur (30) configuré pour générer un signal de mesure d'une grandeur de mesure ;
- un circuit électronique de mesure/exploitation (40) configuré pour fournir des valeurs de mesure de la grandeur de mesure au moyen du signal de mesure, le circuit électronique étant disposé dans la chambre de boîtier,
**caractérisé en ce que**
l'appareil de terrain présente un capot de protection (10) selon l'une quelconque des revendications précédentes,
où le boîtier électronique est disposé dans la chambre de capot (11.3) et où le capot de protection est porté par le boîtier électronique.

8. Appareil de terrain selon la revendication 7,
où la paroi de capot (11), dans la première forme (13.1), présente, au moins en dehors d'une zone du dispositif de fixation (12) et du dispositif d'écartement (15), une distance par rapport au boîtier électronique (20) d'au plus 30 millimètres et/ou d'au moins 5 millimètres.

9. Appareil de terrain selon la revendication 7 ou 8,
où ledit au moins un dispositif de fixation (12), avec la paroi de capot (11) dans la première forme, s'engage sur la paroi de boîtier (21), en particulier sur une pointe.
repose sur un bord ou sur une surface de la paroi du boîtier et exerce sur le capot de protection (10) une force comportant une composante dirigée vers la première extrémité ouverte.

10. Appareil de terrain selon l'une des revendications 8 à 9
, dans lequel le capot de protection peut être monté sur l'appareil de terrain en exerçant une force le long de l'axe longitudinal du
capot de protection, et dans lequel le capot de protection peut être démonté par déformation dans la deuxième forme et par retrait.
